# EUROPEAN PATENT APPLICATION

(11) **EP 4 685 163 A1**
(43) Date of publication of application: **28.01.2026**
(21) Application number: 24774977.3
(22) Date of filing: 21.03.2024
(51) Int. Cl.: C08F 2/44, C08F 290/04

(54) **TWO-COMPONENT CURABLE COMPOSITION AND CURED PRODUCT**

(30) Priority: 20.03.2023 JP 2023044693
(71) Applicant: Cosmo Oil Lubricants Co., Ltd., Tokyo 104-8352 (JP)
(72) Inventor: MATSUBA, Satoshi, Satte-shi, Saitama 340-0193 (JP)
(74) Representative: Adamson Jones
(86) International application number: PCT/JP2024/011133
(87) International publication number: WO 2024/195843

(57) **Abstract**

A two-component curable composition includes: a liquid A containing a compound having one (meth)acrylate group in one molecule, a compound having two or more (meth)acrylate groups in one molecule, a dispersant, a thiourea compound represented by the following Formula (a), and a thermally-conductive filler; and a liquid B containing a polymerization initiator, a dispersant, a plasticizer, and a thermally-conductive filler. In Formula (a), R^{A} represents a straight- or branched-chain aliphatic hydrocarbon group having from 8 to 18 carbon atoms, and each of R^{B1}, R^{B2}, and R^{B3} independently represents a straight- or branched-chain aliphatic hydrocarbon group having from 8 to 18 carbon atoms, or a hydrogen atom.

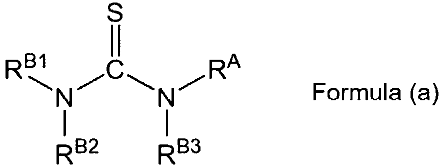

## Description

### Technical Field

The present disclosure relates to a two-component curable composition and a cured product.

### Background Art

In recent years, the performance of electronic instruments such as personal computers, cell phones, and personal digital assistants (PDA), and illuminators and displays such as light emitting diodes (LEDs) and electronic luminescent (EL) devices has been significantly improved due to significant improvement in the performance of computing elements or light emitting elements. Generated heat has also been significantly increased due to improvement in the performance of such computing elements or light emitting elements. Thus, how to dissipate heat in electronic instruments, illuminators, and displays has become an important problem. Countermeasures of disposing thermal interface materials (TIMs, thermally conductive materials) between heat generators and radiators to transfer heat generated from computing elements or light emitting elements to the radiators without losing the heat, to radiate the heat through the radiators, have been taken as countermeasures against heat. Known examples of the radiators include heat sinks, and known examples of the heat generators include central processing units (CPUs) and large-scale integration (LSI). Known examples of materials commonly used as the TIMs include heat dissipation sheets, thermally-conductive greases, and gap fillers. Gap fillers which are TIMs that are in paste forms in early stages, and are cured and become solid after application of the TIMs have received attention.

For example, International Publication No. WO 2020/149193 describes curable compositions including a compound (A) having one (meth)acrylate group in one molecule, a compound (B) having two or more (meth)acrylate groups in one molecule, a polymerization initiator (C), a dispersant (D), and a thermally-conductive filler (E) including zinc oxide, as a gap filler excellent in flexibility, morphological stability, and thermal conductivity.

### SUMMARY OF INVENTION

### Technical Problem

A problem to be solved by one embodiment of the present disclosure is to provide: a two-component curable composition which has excellent curability, and of which the rate of the rise of the viscosity after mixture of a liquid A and a liquid B is suppressed; and a cured product thereof.

### Solution to Problem

The present disclosure includes the following aspects.
<1> A two-component curable composition including:
   a liquid A containing a compound having one (meth)acrylate group in one molecule, a compound having two or more (meth)acrylate groups in one molecule, a dispersant, a thiourea compound represented by the following Formula (a), and a thermally-conductive filler; and
   a liquid B containing a polymerization initiator, a dispersant, a plasticizer, and a thermally-conductive filler, 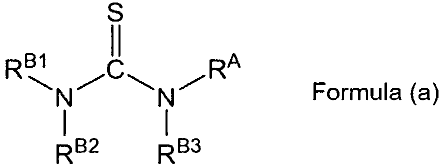
   wherein in Formula (a), R^{A} represents a straight- or branched-chain aliphatic hydrocarbon group having from 8 to 18 carbon atoms, and each of R^{B1}, R^{B2}, and R^{B3} independently represents a straight- or branched-chain aliphatic hydrocarbon group having from 8 to 18 carbon atoms, or a hydrogen atom.
<2> The two-component curable composition according to <1>, wherein R^{B1} in the thiourea compound represented by Formula (a) is a straight- or branched-chain aliphatic hydrocarbon group having from 8 to 18 carbon atoms.
<3> The two-component curable composition according to <1> or <2>, wherein a content of the thiourea compound represented by Formula (a) is from 2.00 parts by mass to 20.00 parts by mass with respect to 100 parts by mass of the compound having one (meth)acrylate group in one molecule.
<4> The two-component curable composition according to any one of <1> to <3>, wherein the liquid B includes a compound having one (meth)acrylate group in one molecule.
<5> A cured product of the two-component curable composition according to any one of <1> to <4>.

### Advantageous Effects of Invention

In accordance with one embodiment of the present disclosure, a two-component curable composition which has excellent curability, and of which the rate of the rise of the viscosity after mixture of a liquid A and a liquid B is suppressed, or a cured product thereof is provided.

### DESCRIPTION OF EMBODIMENTS

A two-component curable composition according to the present disclosure and a cured product thereof are described in detail below.

In the present disclosure, "x to y" representing a numerical range represents a range including the numerical values described as the upper and lower limits of x and y, respectively. A case in which only the upper limit value in the numerical range represented by "x to y" is expressed in a unit means that the lower limit value is also expressed in the same unit.

In the present disclosure, in a case in which plural kinds of substances corresponding to each component exist in the composition, the content by percentage or amount of each component in the composition means, unless otherwise specified, the total content by percentage or amount of the plural kinds of substances existing in the composition.

In a numerical range expressed in a stepwise manner in the present disclosure, the upper or lower limit value expressed in a certain numerical range may be replaced by the upper or lower limit value in another numerical range expressed in a stepwise manner.

In a numerical range expressed in the present disclosure, the upper or lower limit value expressed in a certain numerical range may be replaced by values described in Examples.

In the present disclosure, "(meth)acrylate" is a word used as a concept encompassing both an acrylate and a methacrylate.

In the present disclosure, in a case in which plural kinds of corresponding components exist in the composition, each component in the composition means, unless otherwise specified, the total amount of plural kinds of corresponding substances existing in the composition.

In the present disclosure, any combination of two or more preferred aspects is a more preferred aspect.

In the present disclosure, "JIS" is used as the abbreviated name of the Japanese Industrial Standards.

### (Two-Component Curable Composition)

A two-component curable composition according to the present disclosure includes: a liquid A containing a compound having one (meth)acrylate group in one molecule (hereinafter also referred to as "compound A"), a compound having two or more (meth)acrylate groups in one molecule (hereinafter also referred to as "compound B"), a dispersant, a thiourea compound represented by Formula (a) described later (hereinafter also referred to as "specific thiourea compound"), and a thermally-conductive filler; and a liquid B containing a polymerization initiator, a dispersant, a plasticizer, and a thermally-conductive filler.

The two-component curable composition according to the present disclosure has such a configuration as described above, whereby the two-component curable composition has excellent curability, and the rate of the rise of the viscosity of the two-component curable composition after mixture of the liquid A and the liquid B is suppressed. The reason that this effect is produced is presumed as follows.

A reducing agent has been conventionally added to a two-component curable composition applicable to a gap filler from the viewpoint of, for example, accelerating the decomposition of a polymerization initiator, and easily allowing polymerization reaction to proceed. However, in a case in which a two-component curable composition is cured to form a cured product, time from mixing of a liquid A and a liquid B to application of the mixture may be needed, and therefore, the rise of viscosity just after the mixing is not preferred. Therefore, the suppression of the rate of the rise of the viscosity after the mixture of the liquid A and the liquid B is demanded. Specifically, it is demanded that time from the mixing of the liquid A and the liquid B to the doubling of the viscosity (so-called pot life) is long.

Too long time for curing the two-component curable composition is not preferred. In other words, excellent curability is demanded. The too long pot life of the two-component curable composition leads to the deterioration of the curability, and therefore, in this regard, it is demanded that the pot life is not too long.

For example, the pot life is preferably from 30 minutes to 120 minutes from the above viewpoint.

In contrast, the two-component curable composition according to the present disclosure includes the thiourea compound represented by Formula (a) described later (specific thiourea compound) as a reducing agent. The specific thiourea compound has a straight- or branched-chain aliphatic hydrocarbon group having from 8 to 18 carbon atoms in a chemical structure, and the presence of the aliphatic hydrocarbon group allows the action of accelerating the decomposition of a polymerization initiator to be adjusted, if appropriate. As a result, it is considered that the rate of the rise of the viscosity after the mixture of the liquid A and the liquid B is suppressed while maintaining excellent curability, and the pot life is prolonged.

Each component included in the two-component curable composition according to the present disclosure is described below.

### <Liquid A>

The two-component curable composition according to the present disclosure includes the liquid A. The liquid A contains the compound having one (meth)acrylate group in one molecule (compound A), the compound having two or more (meth)acrylate groups in one molecule (compound B), the dispersant, the thiourea compound represented by Formula (a) described later, and the thermally-conductive filler.

### <<Compound Having One (Meth)Acrylate Group in One Molecule>>

The liquid A contains the compound having one (meth)acrylate group in one molecule (compound A).

The compound A is not particularly limited, and examples thereof include straight-chain, branched-chain, or cyclic alkyl (meth)acrylates. From the viewpoint of achieving both heat resistance and the flexibility of the obtained cured product, the compound A is preferably a straight- or branched-chain alkyl (meth)acrylate, and still more preferably includes the compound represented by the following Formula (1).

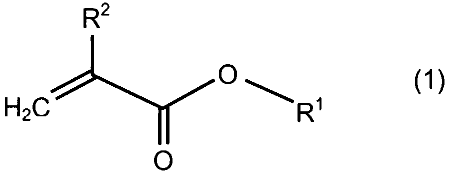

In Formula (1), R¹ represents an alkyl group having from 1 to 50 carbon atoms, and R² represents a hydrogen atom or a methyl group.

In Formula (1), the alkyl group in R¹ may be straight or branched. The alkyl group may have a substituent.

Examples of the substituent include a carboxy group, a hydroxy group, an amino group, an aryl group, and a heterocyclic group.

From the viewpoint of achieving both heat resistance and flexibility, the total number of the carbon atoms of the alkyl group in R¹ is preferably from 2 to 30, more preferably from 5 to 25, and still more preferably from 10 to 25, and the total number of the carbon atoms is particularly preferably from 12 to 24. Examples of the alkyl group in R¹ include a methyl group, an ethyl group, an n-propyl group, an isopropyl group, an n-butyl group, an isobutyl group, a sec-butyl group, a tert-butyl group, a cyclobutyl group, an n-pentyl group, an isopentyl group, a sec-pentyl group, a tert-pentyl group, a neopentyl group, a 2-methylbutyl group, a 1,2-dimethylpropyl group, a 1-ethylpropyl group, a cyclopentyl group, an n-hexyl group, an isohexyl group, a sec-hexyl group, a tert-hexyl group, a neohexyl group, a 2-methylpentyl group, a 1,2-dimethylbutyl group, a 2,3-dimethylbutyl group, a 1-ethylbutyl group, a cyclohexyl group, an n-heptyl group, an isoheptyl group, a sec-heptyl group, a tert-heptyl group, a neoheptyl group, a cycloheptyl group, an n-octyl group, an isooctyl group, a sec-octyl group, a tert-octyl group, a neooctyl group, 2-ethylhexyl group, a acyclooctyl group, an n-nonyl group, an isononyl group, a sec-nonyl group, a tert-nonyl group, a neononyl group, a cyclononyl group, an n-decyl group, an isodecyl group, a sec-decyl group, a tert-decyl group, a neodecyl group, a cyclodecyl group, an n-undecyl group, a cycloundecyl group, an n-dodecyl group, a cyclododecyl group, a norbornyl group, a bornyl group, a menthyl group, an isobornyl group, and an adamanthyl group.

Here, "total number of carbon atoms" means, in a case in which the above-described alkyl group has a substituent including carbon atoms, the total number of carbon atoms, including the number of the carbon atoms of the substituent.

From the viewpoint of achieving both heat resistance and flexibility, R¹ in Formula (1) is preferably a straight- or branched-chain, unsubstituted alkyl group of which the total number of the carbon atoms is from 2 to 30, or a straight- or branched-chain alkyl group which has a substituent, and of which the total number of the carbon atoms is from 2 to 30, more preferably a straight- or branched-chain, unsubstituted alkyl group of which the total number of the carbon atoms is from 2 to 25, or a straight- or branched-chain alkyl group which has a hydroxy group, and of which the total number of the carbon atoms is from 2 to 25, and still more preferably a straight- or branched-chain, unsubstituted alkyl group having from 12 to 24 carbon atoms.

Examples of the compound A include lauryl (meth)acrylate, isostearyl (meth)acrylate, tetradecyl (meth)acrylate, hexadecyl (meth)acrylate, octadecyl (meth)acrylate, 2-hydroxyethyl (meth)acrylate, 4-hydroxybutyl (meth)acrylate, 2-hydroxybutyl (meth)acrylate, and 2-decyltetradecyl (meth)acrylate.

R² is a hydrogen atom or a methyl group, and preferably a methyl group from the viewpoint of achieving both heat resistance and flexibility.

### -Content-

The content of the compound A is preferably from 1% by mass to 12% by mass, and more preferably from 2% by mass to 10% by mass with respect to the total mass of the liquid A.

The liquid A may include one kind of the compound A singly, or may include two or more kinds of the compounds A.

The compound A is preferably a monomer having a molecular weight of less than 1000.

In the present disclosure, a monomer means a polymerizable compound having a molecular weight of less than 1000.

### <<Compound Having Two or More (Meth)Acrylate Groups in One Molecule>>

The liquid A contains the compound having two or more (meth)acrylate groups in one molecule (compound B).

Examples of the compound B include a (meth)acrylate having a straight- or branched-chain alkylene group. Examples of the compound B include hexanediol di(meth)acrylate, butanediol di(meth)acrylate, 1,3-butanediol di(meth)acrylate, 1,4-butanediol di(meth)acrylate, ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, and trimethylolpropane tri(meth)acrylate.

From the viewpoint of achieving both heat resistance and flexibility, the compound B is preferably a compound having two or three (meth)acrylate groups in one molecule, more preferably a compound having two (meth)acrylate groups in one molecule, and still more preferably a compound represented by the following Formula (2).

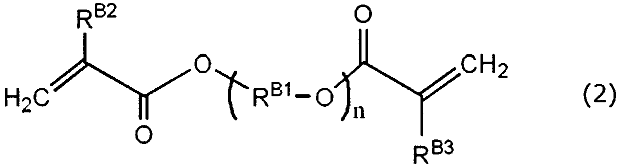

In Formula (2), R^{B1} represents an alkylene group having from 1 to 5 carbon atoms, each of R^{B2} and R^{B3} independently represents a hydrogen atom or a methyl group, and n represents an integer of 4 or more.

The alkylene group having from 1 to 5 carbon atoms, represented by R^{B1}, may be straight or branched.

From the viewpoint of flexibility, the alkylene group represented by R^{B1} is preferably a straight- or branched-chain alkylene group having from 2 to 5 carbon atoms, more preferably a straight- or branched-chain alkylene group having from 2 to 4 carbon atoms, and still more preferably a branched-chain alkylene group having 3 or 4 carbon atoms.

R^{B2} and R^{B3} are preferably methyl groups.

It is preferable that n is from 4 to 25, it is more preferable that n is from 4 to 10, and it is still more preferable that n is from 4 to 8.

From the viewpoint of flexibility and morphological stability, it is preferable that in Formula (2), R^{B1} is a straight- or branched-chain alkylene group having from 2 to 5 carbon atoms (more preferably a straight- or branched-chain alkylene group having from 2 to 4 carbon atoms, and still more preferably a branched-chain alkylene group having 3 or 4 carbon atoms), R^{B2} and R^{B3} are methyl groups, and n is from 4 to 25 (more preferably from 4 to 10, and still more preferably from 3 to 8).

### -Content-

The content of the compound B is preferably from 0.5 parts by mass to 10 parts by mass, and more preferably from 1 part by mass to 8 parts by mass with respect to 100 parts by mass of the compound A from the viewpoint of the flexibility and morphological stability of the obtained cured product. The above-described phrase "with respect to 100 parts by mass of compound A" refers to the total amount of the compound A included in the liquid A and the compound A included in the liquid B in a case in which the compounds A are included in both the liquid A and the liquid B. The above-described phrase "content of compound B" refers to the total amount of the compound B included in the liquid A and the compound B included in the liquid B in a case in which the compounds B are included in both the liquid A and the liquid B.

From the viewpoint of storage stability, the content of the compound B is preferably from 0.05% by mass to 3% by mass, more preferably from 0.1% by mass to 1% by mass, and still more preferably from 0.1% by mass to 0.5% by mass with respect to the total mass of the liquid A.

The liquid A may include one kind of the compound B singly, or may include two or more kinds of the compounds B.

The compound B is preferably a monomer having a molecular weight of less than 1000.

### <<Dispersant>>

The liquid A includes the dispersant. In the two-component curable composition according to the present disclosure, the dispersant is included in each of the liquid A and the liquid B described later. Therefore, the miscibility of the liquid A and the liquid B (hereinafter also simply referred to as "miscibility") is favorable, and the two-component curable composition is excellent in suppression of poor curing.

The dispersants included in the liquid A and the liquid B may be identical dispersants, or may be dispersants different from each other. From the viewpoint of storage stability and miscibility, the dispersants are preferably identical dispersants.

The dispersant is not particularly limited, and examples thereof include anionic surfactants, cationic surfactants, nonionic surfactants, ampholytic surfactants, high-molecular surfactants, alcohols, compounds having carboxy groups (fatty acids and the like), metallic soaps, fatty acid oligomer compounds, fluorine-based surfactants, and boron-based surfactants.

Among the dispersants described above, the dispersant is preferably at least one compound selected from the group consisting of the nonionic surfactants, the compounds having carboxy groups, and the metallic soaps.

At least one of the liquid A or the liquid B preferably includes at least one compound selected from the group consisting of the nonionic surfactants, the compounds having carboxy groups, and the metallic soaps, as the dispersant.

Examples of the nonionic surfactants include polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene sorbitol fatty acid ester, glycerol fatty acid ester, polyoxyethylene glycerin fatty acid ester, polyglycerol fatty acid ester, polyglycerol fatty acid ether, polyglycerol monoalkyl ether, sucrose fatty acid ester, polyoxyethylene alkylamine, polyethylene glycol polypropylene glycol block copolymer, acetylene glycol, and polyoxyethylene adducts of acetylene glycol.

Such a compound having a carboxy group is not particularly limited, and may be a fatty acid having one carboxy group and a hydrocarbon group in one molecule, or a compound having two or more carboxy groups in one molecule. Examples of the compound having a carboxy group include an aliphatic carboxylic acid, an aromatic carboxylic acid, a fatty acid having an aliphatic hydrocarbon group having from 12 to 22 carbon atoms, and a fatty acid having an unsaturated hydrocarbon group having from 18 to 22 carbon atoms.

Examples of the fatty acid having an aliphatic hydrocarbon group having from 12 to 22 carbon atoms include stearic acid, palmitic acid, myristic acid, and lauric acid. Examples of the fatty acid having an unsaturated hydrocarbon group having from 18 to 22 carbon atoms include oleic acid and erucic acid.

Examples of the compound having a carboxy group include: a polyvalent carboxylic acid having two or more carboxy groups in one molecule (that is, polycarboxylic acid), such as oxalic acid, malonic acid, succinic acid, fumaric acid, maleic acid, or adipic acid; an alkylamine salt or alkylammonium salt of a polycarboxylic acid; a polycarboxylate such as polyaminoamide polycarboxylate, a sodium polycarboxylate salt, an ammonium polycarboxylate salt, or an aminoalcohol polycarboxylate salt; and a polycarboxylate-based copolymer.

Examples of a polycarboxylate-based compound include an alkylamine salt or alkylammonium salt of a polycarboxylic acid, polyaminoamide polycarboxylate, a sodium polycarboxylate salt, an ammonium polycarboxylate salt, and an aminoalcohol polycarboxylate salt.

Examples of the metallic soaps include metal salts of higher fatty acids such as calcium stearate, potassium oleate, and calcium oleate.

From the viewpoint of the flexibility of the obtained cured product, at least one compound selected from the group consisting of a polyglycerol monoalkyl ether compound, a compound having a carboxy group, and a metallic soap is preferably included, at least one compound selected from the group consisting of a polyglycerol monoalkyl ether compound and a fatty acid having an aliphatic hydrocarbon group having from 12 to 22 carbon atoms is more preferably included, and at least one compound selected from the group consisting of a polyglycerol monoalkyl ether compound and a fatty acid having an unsaturated hydrocarbon group having from 18 to 22 carbon atoms is still more preferably included as the dispersant.

### -Content-

From the viewpoint of storage stability and miscibility, the content of the dispersant included in the liquid A is preferably from 0.1% by mass to 3% by mass, more preferably from 0.2% by mass to 1.5% by mass, and still more preferably from 0.2% by mass to 0.8% by mass with respect to the total mass of the liquid A.

From the viewpoint of obtaining the cured product of which the properties of suppressing of the changes of the flexibility, the morphological stability, and the thermal conductivity are favorable, the content of the dispersant included in the liquid A is preferably from 0.5 parts by mass to 20 parts by mass, and more preferably from 1 part by mass to 17 parts by mass with respect to 100 parts by mass of the compound A (referring to the total amount of the compound A included in the liquid A and the compound A included in the liquid B in a case in which the compounds A are included in both the liquid A and the liquid B).

The liquid A may include one kind of the dispersant singly, or may include two or more kinds of the dispersants.

### <<Specific Thiourea Compound>>

The liquid A includes the thiourea compound represented by the following Formula (a) (specific thiourea compound). The specific thiourea compound functions as the reducing agent. In the case of mixing the liquid A and the liquid B, the specific thiourea compound accelerates the decomposition of the polymerization initiator, and allows polymerization reaction to easily proceed.

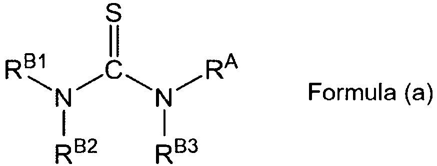

In Formula (a), R^{A} represents a straight- or branched-chain aliphatic hydrocarbon group having from 8 to 18 carbon atoms, and each of R^{B1} R^{B2}, and R^{B3} independently represents a straight- or branched-chain aliphatic hydrocarbon group having from 8 to 18 carbon atoms, or a hydrogen atom.

The specific thiourea compound has at least one straight- or branched-chain aliphatic hydrocarbon group having from 8 to 18 carbon atoms (hereinafter also referred to as "specific hydrocarbon group") in one molecule. From the viewpoint of exhibiting excellent curability and further suppressing the rate of the rise of the viscosity after mixture of the liquid A and the liquid B, the specific thiourea compound preferably has two or more specific hydrocarbon groups in one molecule, and is more preferably a specific thiourea compound in which R^{B1} in Formula (a) is a specific hydrocarbon group. In this case, each of R^{B2} and R^{B3} may be independently a specific hydrocarbon group or hydrogen atom.

The number of carbon atoms in the specific hydrocarbon group is from 8 to 18. From the viewpoint of exhibiting excellent curability and further suppressing the rate of the rise of the viscosity after mixture of the liquid A and the liquid B, the number is preferably from 10 to 16, and more preferably from 10 to 14.

Examples of the specific thiourea compound include N,N'-dioctylthiourea, N,N'-didecylthiourea, N,N'-dilaurylthiourea, N,N'-ditetradecylthiourea, N,N'-dihexadecylthiourea, N,N'-dioctadecylthiourea, N-octylthiourea, N-decylthiourea, N-laurylthiourea, N-tetradecylthiourea, N-hexadecylthiourea, and N-octadecylthiourea. Of these, N,N'-dilaurylthiourea is more preferred from the viewpoint of exhibiting excellent curability and further suppressing the rate of the rise of the viscosity after mixture of the liquid A and the liquid B.

### -Content-

From the viewpoint of exhibiting excellent curability and further suppressing the rate of the rise of the viscosity after mixture of the liquid A and the liquid B, the content of the specific thiourea compound is preferably from 2.00 parts by mass to 20.00 parts by mass, more preferably from 4.00 parts by mass to 17.00 parts by mass, and still more preferably from 6.00 parts by mass to 15.00 parts by mass with respect to 100 parts by mass of the compound A (referring to the total amount of the compound A included in the liquid A and the compound A included in the liquid B in a case in which the compounds A are included in both the liquid A and the liquid B).

### =Additional Reducing Agent=

The liquid A may include an additional reducing agent other than the specific thiourea compound as long as the effect of the present disclosure can be obtained. From the viewpoint of exhibiting excellent curability and further suppressing the rate of the rise of the viscosity after mixture of the liquid A and the liquid B, the liquid A preferably includes only the specific thiourea compound. The additional reducing agent is not particularly limited as long as the additional reducing agent is a reducing agent that can accelerate the decomposition of the polymerization initiator described above. Examples of the additional reducing agent include known reducing agents used together with a polymerization initiator. In a case in which the two-component curable composition according to the present disclosure includes a reducing agent other than the specific thiourea compound, the content of the additional reducing agent with respect to the total mass of the reducing agent is preferably 30% by mass or less, and more preferably 10% by mass or less.

### <<Thermally-Conductive Filler>>

The liquid A includes the thermally-conductive filler.

The thermally-conductive fillers included in the liquid A and the liquid B described later may be identical thermally-conductive fillers, or may be thermally-conductive fillers different from each other. From the viewpoint of storage stability and miscibility, the thermally-conductive fillers included in the liquid A and the liquid B described later are preferably identical thermally-conductive fillers.

The identical thermally-conductive fillers refer to thermally-conductive fillers of which the kinds and percentages of the elements are exactly the same.

The thermally-conductive filler is not particularly limited. A known filler used in TIM can be used as the thermally-conductive filler. As the thermally-conductive filler, at least one compound selected from the group consisting of zinc oxide and magnesium oxide is preferably included, and zinc oxide is more preferably included from the viewpoint of thermal conductivity.

The zinc oxide applied as the thermally-conductive filler is not particularly limited, and examples thereof include zinc oxide (ZnO) that is commonly used as a thermally-conductive filler.

The zinc oxide is preferably in particle form. From the viewpoint of achieving both the flexibility and high conductivity of the obtained cured product, the zinc oxide is preferably a particle having a volume-average particle diameter of from 0.05 µm to 100 µm, and more preferably a particle of from 0.1 µm to 50 µm.

From the viewpoint of high conductivity, the volume-average particle diameter of the zinc oxide is preferably 30 µm or more, and more preferably from 30 µm to 50 µm.

In a case in which the liquid A includes zinc oxide, the liquid A preferably includes two or more kinds of zinc oxides having different volume-average particle diameters from the viewpoint of highly filling the thermally-conductive filler into the composition.

In a case in which the liquid A includes two or more kinds of zinc oxides having different volume-average particle diameters, the ratio of the maximum volume-average particle diameter to the minimum volume particle diameter is preferably from 30 to 70 times, and still more preferably from 40 to 60 times from the viewpoint of highly filling the thermally-conductive filler into the composition.

The minimum volume particle diameter and the maximum volume-average particle diameter refer to a minimum volume particle diameter and a maximum volume-average particle diameter determined in a volume distribution obtained in measurement of a volume-average particle diameter described later.

In a case in which the liquid A includes zinc oxides, the zinc oxides included in the liquid A are more preferably two or more zinc oxides of which the volume-average particle diameters are from 0.05 µm to 100 µm, the volume-average particle diameters are different, and the difference between the volume-average particle diameters is 5 µm or more from the viewpoint of highly filling the thermally-conductive filler.

### -Content-

The content of the thermally-conductive filler included in the liquid A is preferably 50% by mass or more, more preferably from 70% by mass to 98% by mass, and still more preferably from 85% by mass to 98% by mass with respect to the total mass of the liquid A from the viewpoint of thermal conductivity.

The content of the thermally-conductive filler means the total content of zinc oxide, magnesium oxide, and a compound other than the zinc oxide and the magnesium oxide, described later.

The liquid A included in the two-component curable composition may include one kind of the thermally-conductive filler singly, or may include two or more kinds of the thermally-conductive fillers.

In a case in which the thermally-conductive filler includes zinc oxide, the content of the zinc oxide is preferably 50% by mass or more, more preferably from 70% by mass to 100% by mass, and still more preferably from 85% by mass to 100% by mass with respect to the total mass of the thermally-conductive filler included in the liquid A from the viewpoint of thermal conductivity.

The total mass of the thermally-conductive filler included in the liquid A means the total mass of zinc oxide and magnesium oxide included in the liquid A, and a compound other than the zinc oxide and the magnesium oxide, described later.

The liquid A included in the two-component curable composition may include one kind of the zinc oxide singly, or may include two or more kinds of the zinc oxides.

The thermally-conductive filler included in the liquid A may include magnesium oxide.

The magnesium oxide used as the thermally-conductive filler is not particularly limited, and examples thereof include magnesium oxide (MgO) that is commonly used as a thermally-conductive filler.

The liquid A included in the two-component curable composition may include one kind of a magnesium oxide singly, or may include two or more kinds of magnesium oxides.

The magnesium oxide is preferably in particle form, and is preferably a particle having a volume-average particle diameter of 10 µm or more, more preferably from 20 µm to 100 µm, and still more preferably from 30 µm to 80 µm from the viewpoint of suppressing the change of thermal conductivity.

The thermally-conductive filler included in the liquid A of the two-component curable composition according to the present disclosure preferably includes both magnesium oxide and zinc oxide from the viewpoint of the morphological stability of the obtained cured product.

In a case in which the thermally-conductive filler includes both magnesium oxide and zinc oxide, examples of the zinc oxide include the zinc oxides described above, and preferred aspects thereof are also similar.

In a case in which the liquid A includes both magnesium oxide and zinc oxide as the thermally-conductive filler, the content (total content in a case in which two or more kinds of zinc oxides are included) of the zinc oxide is preferably from 50% by mass to 90% by mass, more preferably from 60% by mass to 80% by mass, and still more preferably from 65% by mass to 75% by mass with respect to the total mass of the thermally-conductive filler included in the liquid A from the viewpoint of obtaining the cured product of which the properties of suppressing the change of the flexibility, morphological stability, and thermal conductivity are favorable.

In a case in which the liquid A includes both magnesium oxide and zinc oxide as the thermally-conductive filler, the content ratio between the magnesium oxide and the zinc oxide (magnesium oxide: zinc oxide) in the thermally-conductive filler is preferably from 5:1 to 1:5, more preferably from 1:1 to 1:4, and still more preferably from 1:1.5 to 1:3 based on mass from the viewpoint of obtaining the cured product of which the properties of suppressing the change of the flexibility, morphological stability, and thermal conductivity are favorable.

The volume-average particle diameter described above is calculated as a volume-average particle diameter (50% diameter) from a measured value (volume distribution) measured by, for example, a particle size distribution measurement apparatus (for example, product name: NANO PARTICLE SIZE ANALYZER SALD-7500NANO, manufactured by Shimadzu Corporation) at a laser wavelength of 405 nm.

In a case in which the liquid A includes two or more kinds of zinc oxides having different volume-average particle diameters, the content of a zinc oxide having a maximum volume-average particle diameter determined in a volume distribution is preferably 50% by mass or more with respect to the total mass of the zinc oxides included in the thermally-conductive filler.

Magnesium oxide or zinc oxide preferably has two or more peaks in a volume distribution from the viewpoint of highly filling the thermally-conductive filler into the composition. The volume distribution is determined by a method similar to the method of determining the volume-average particle diameter of the zinc oxide described above.

The liquid A included in the two-component curable composition according to the present disclosure may include a compound other than the magnesium oxide and zinc oxide described above, as the thermally-conductive filler.

Examples of the compound other than the zinc oxide include alumina (aluminum oxide), aluminum hydroxide, aluminum nitride, boron nitride, and carbon.

### <<Rheology Control Agent>>

The liquid A preferably further includes a rheology control agent from the viewpoint of miscibility and storage stability.

The rheology control agent as used herein refers to an additive that imparts a non-Newtonian property to a change in shear rate. Specifically, the rheology control agent is an additive that imparts such flow characteristics that a shear viscosity is decreased in a high shear rate range while increasing a shear viscosity in a low shear rate range.

The rheology control agent may be a rheology control agent based on an inorganic compound, or may be a rheology control agent based on an organic compound. Examples of the system rheology control agent based on an inorganic compound include fumed silica, bentonite, mica, and kaolin.

Examples of the rheology control agent based on an organic compound include a urea-modified polymer, a urethane-modified polymer, a castor oil wax, a polyethylene wax, a polyamide wax, and a fatty acid amide wax.

Of these, the rheology control agent is preferably a rheology control agent based on an inorganic compound, more preferably fumed silica or bentonite, and still more preferably bentonite. In the case of using fumed silica, fumed silica of which the surface is allowed to have hydrophobicity by a silane coupling agent or another surface modifying agent is preferred. In the case of using bentonite, an organobentonite subjected to organic modification with a quaternary ammonium salt or another organic modifier is preferably used.

The content of the rheology control agent is not particularly limited, and can be set, if appropriate.

From the viewpoint of storage stability, it is preferable that the liquid A does not include any polymerization initiator. The phrase "does not include any polymerization initiator" means that the content of polymerization initiator is 0% by mass, or a polymerization initiator is not included in an amount exhibiting a polymerization initiation ability.

### <<Polymerizable Polymer>>

From the viewpoint of storage stability, the liquid A may include a polymerizable polymer (hereinafter also referred to as "compound C"), if necessary. The polymerizable polymer in the present disclosure means a polymerizable compound that has one or more (meth)acrylate groups in one molecule, and has a weight-average molecular weight (Mw) of 1000 or more. The concept of "polymer" in the present disclosure also includes a so-called oligomer.

The main chain of the polymerizable polymer (compound C) is not particularly limited, and is preferably a polymer of a (meth)acrylic monomer or a polymer of a butadiene-based monomer, and more preferably a polymer of a (meth)acrylic monomer from the viewpoint of compatibility with another compound.

Examples of the compound C include trade name "KANEKA XMAP RC110C" (acrylic polymer having acrylate groups at both ends, manufactured by KANEKA CORPORATION), trade name "KANEKA XMAP MM110C" (acrylic polymer having acrylate group at one end, manufactured by KANEKA CORPORATION), and "NISSO PB TEAI-1000" (hydrogenated butadiene-based polymer having acrylate groups at both ends, manufactured by Nippon Soda Co., Ltd.).

In a case in which the liquid A includes the compound C, the content of the compound C is preferably 10% by mass or less, more preferably 7% by mass or less, and still more preferably 5% by mass or less with respect to the total mass of the liquid A.

From the viewpoint of storage stability, the liquid A may include a plasticizer described later, if necessary. The plasticizer included in the liquid A is synonymous with a plasticizer in the liquid B, described later, and a preferred aspect thereof is also similar.

In a case in which the liquid A includes the plasticizer, the content of the plasticizer is preferably 5% by mass or less, and more preferably 3% by mass or less with respect to the total mass of the liquid A.

The lower limit value thereof is not particularly limited, and is preferably 0% by mass or more.

### <Liquid B>

The two-component curable composition according to the present disclosure includes the liquid A and the liquid B, and the liquid B includes a polymerization initiator, a dispersant, a plasticizer, and a thermally-conductive filler.

### <<Polymerization Initiator>>

The liquid B includes the polymerization initiator.

A known thermal polymerization initiator, a known photopolymerization initiator, or the like, which is a compound that generates a polymerization initiation species such as a radical or a cation by light, heat, or both energies, can be selected and used as the polymerization initiator, if appropriate.

As the polymerization initiator, a radical polymerization initiator is preferred, a peroxide that generates a free radical by heat is more preferred, and an organic peroxide that generates a free radical by heat is still more preferred from the viewpoint of reactivity with the compound A and the compound B.

Examples of the organic peroxide include isobutyl peroxide, α,α'-bis(neodecanoylperoxy)diisopropylbenzene, cumylperoxyneodecanoate, di-n-propylperoxydicarbonate, di-s-butylperoxydicarbonate, 1,1,3,3-tetramethylbutylperoxyneodecanoate, bis(4-t-butylcyclohexyl)peroxydicarbonate, 1-cyclohexyl-1-methylethylperoxyneodecanoate, di-2-ethoxyethylperoxydicarbonate, di(ethylhexyl)peroxydicarbonate, t-hexylperoxyneodecanoate, dimethoxybutylperoxydicarbonate, di(3-methyl-3-methoxybutyl)peroxydicarbonate, t-butylperoxyneodecanoate, t-hexylperoxypivalate, 3,5,5-trimethylhexanoyl peroxide, octanoyl peroxide, lauroyl peroxide, stearoyl peroxide, 1,1,3,3-tetramethylbutylperoxy-2-ethylhexanoate, succinic peroxide, 2,5-dimethyl-2,5-di(2-ethylhexanoyl)hexane, 1-cyclohexyl-1-methylethylperoxy-2-ethylhexanoate, t-hexylperoxy-2-ethylhexanoate, 4-methylbenzoyl peroxide, t-butylperoxy-2-ethylhexanoate, m-toluoylbenzoyl peroxide, benzoyl peroxide, t-butylperoxyisobutyrate, 1,1-bis(t-butylperoxy)-2-methylcyclohexane, 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexanone, 2,2-bis(4,4-dibutylperoxycyclohexyl)propane, 1,1-bis(t-butylperoxy)cyclododecane, t-hexylperoxyisopropylmonocarbonate, t-butyl peroxymaleic acid, t-butylperoxy-3,5,5-trimethylhexanoate, t-butylperoxylaurate, 2,5-dimethyl-2,5-di(m-toluoylperoxy)hexane, t-butylperoxyisopropylmonocarbonate, t-butylperoxy-2-ethylhexylcarbonate, t-hexylperoxybenzoate, 2,5-dimethyl-2,5-di(benzoylperoxy)hexane, t-butylperoxyacetate, 2,2-bis(t-butylperoxy)butane, t-butylperoxybenzoate, n-butyl-4,4-bis(t-butylperoxy)valerate, di-t-butylperoxyisophthalate, α,α'-bis(t-butylperoxy)diisopropylbenzene, dicumyl peroxide, 2,5-dimethyl-2,5-di(t-butylperoxy)hexane, t-butylcumyl peroxide, di-t-butyl peroxide, p-menthane hydroperoxide, 2,5-dimethyl-2,5-di(t-butylperoxy)hexyne, diisopropylbenzene hydroperoxide, t-butyltrimethylsilyl peroxide, 1,1,3,3-tetramethylbutyl hydroperoxide, cumene hydroperoxide, t-hexyl hydroperoxide, t-butyl hydroperoxide, benzoyl peroxide, and lauroyl peroxide.

Of these, the organic peroxide is preferably at least one compound selected from the group consisting of benzoyl peroxide, t-butylperoxy-2ethylhexylcarbonate 1,1,3,3-tetramethylbutylperoxy-2-ethylhexanoate, and cumene hydroperoxide from the viewpoint of reactivity.

### -Content-

From the viewpoint of obtaining the cured product of which the properties of suppressing the changes of the flexibility, the morphological stability, and the thermal conductivity are favorable, the content of the polymerization initiator is preferably from 0.5 parts by mass to 50 parts by mass, more preferably from 0.5 parts by mass to 30 parts by mass, and still more preferably from 1 part by mass to 15 parts by mass with respect to 100 parts by mass of the compound A (referring to the total amount of the compound A included in the liquid A and the compound A included in the liquid B in a case in which the compounds A are included in both the liquid A and the liquid B).

From the viewpoint of storage stability, the content of the polymerization initiator in the liquid B is preferably from 0.05% by mass to 3% by mass, more preferably from 0.1% by mass to 2% by mass, and still more preferably from 0.2% by mass to 1% by mass with respect to the total mass of the liquid B.

The liquid B may include one kind of a polymerization initiator singly, or may include two or more kinds of polymerization initiators.

### <<Dispersant>>

The liquid B includes the dispersant. The dispersant included in the liquid B is synonymous with the dispersant included in the liquid A described above, and a preferred aspect thereof except the content of the dispersant is also similar.

The dispersant included in the liquid B may be identical with or different from the dispersant included in the liquid A. From the viewpoint of storage stability, the dispersant included in the liquid B is preferably identical with the dispersant included in the liquid A.

From the viewpoint of storage stability and miscibility, the content of the dispersant in the liquid B is preferably from 0.05% by mass to 3% by mass, more preferably from 0.1% by mass to 2% by mass, and still more preferably from 0.1% by mass to 1% by mass with respect to the total mass of the liquid B.

### <<Plasticizer>>

The liquid B includes the plasticizer. The plasticizer is not particularly limited, and examples thereof include a polymer that can be used as a plasticizer, a fatty acid ester compound having an unsaturated hydrocarbon group, an aromatic carboxylic acid ester compound, and an oil including a fatty acid having an unsaturated hydrocarbon group and an aromatic carboxylic acid.

In the present disclosure, "polymer" means a compound having a weight-average molecular weight (Mw) of 1000 or more.

The concept of "polymer" in the present disclosure also includes a so-called oligomer.

Examples of the polymer include an acrylic polymer, a polyester-based polymer, a polyurethane-based polymer, and a silicone polymer. From the viewpoint of the heat resistance and flexibility of the obtained cured product, the polymer is preferably an acrylic polymer.

In a case in which the plasticizer is the polymer, the polymer s preferably a polymer having a glass transformation temperature of -20°C or less, and more preferably an acrylic polymer having a glass transformation temperature of -20°C or less from the viewpoint of the heat resistance and flexibility of the obtained cured product.

The glass transformation temperature (Tg) of the polymer is determined by examining the inflection point of a DSC curve measured using a differential thermal analyzer (DSC).

Examples of the fatty acid ester compound having an unsaturated hydrocarbon group include ester compounds of palmitoleic acid, oleic acid, linoleic acid, linolenic acid, and the like.

Examples of the aromatic carboxylic acid ester compound include ester compounds of phthalic acid, terephthalic acid, benzoic acid, trimellitic acid, and the like.

From the viewpoint of high-temperature stability, the plasticizer preferably includes the aromatic carboxylic acid ester compound, and preferably includes a trimellitate ester.

### -Content-

From the viewpoint of achieving all of miscibility, heat resistance, and flexibility, the content (total content in the case of including two or more kinds of plasticizers) of the plasticizer is preferably from 3% by mass to 15% by mass, and more preferably from 5% by mass to 12% by mass with respect to the total mass of the liquid B.

The liquid B included in the two-component curable composition may include one kind of a plasticizer singly, or may include two or more kinds of plasticizers.

### <<Thermally-Conductive Filler>>

The liquid B includes the thermally-conductive filler. The thermally-conductive filler included in the liquid B is synonymous with the thermally-conductive filler included in the liquid A described above, and a preferred aspect thereof is also similar.

The thermally-conductive filler included in the liquid B may be identical with or different from the thermally-conductive filler included in the liquid A. From the viewpoint of storage stability and miscibility, the thermally-conductive filler included in the liquid B is preferably identical with the thermally-conductive filler included in the liquid A.

The content of the thermally-conductive filler included in the liquid B is preferably 50% by mass or more, more preferably from 70% by mass to 98% by mass, and still more preferably from 85% by mass to 98% by mass with respect to the total mass of the liquid B from the viewpoint of thermal conductivity.

### <<Polymerizable Compound>>

The liquid B may include a polymerizable compound from the viewpoint of the miscibility of the liquid A and the liquid B. Examples of the polymerizable compound include a compound having one (meth)acrylate group in one molecule (that is, the above-described compound A), a compound having two or more (meth)acrylate groups in one molecule (that is, the above-described compound B), and a polymerizable polymer (that is, the above-described compound C).

The liquid B may include only one kind of a polymerizable compound, or may include two or more kinds of polymerizable compounds. In other words, the liquid B may include only one of the compound A, the compound B, or the compound C, or may include two or more kinds of the compound A, the compound B, or the compound C. However, in a case in which the liquid B includes a polymerizable compound, it is preferable that the liquid B includes only the compound A from the viewpoint of storage stability.

### Compound Having One (Meth)Acrylate Group in One Molecule (Compound A)

In a case in which the liquid B includes the compound A, the compound A included in the liquid B is synonymous with the compound A included in the liquid A described above, and a preferred thereof except the content of the compound A is also similar.

The compound A included in the liquid B may be identical with or different from the compound A included in the liquid A. From the viewpoint of storage stability, the compound A included in the liquid B is preferably identical with the compound A included in the liquid A.

From the viewpoint of storage stability, the content of compound A in the liquid B is preferably from 1% by mass to 12% by mass, and more preferably from 2% by mass to 10% by mass with respect to the total mass of the liquid B. The liquid B may include one kind of the compound A singly, or may include two or more kinds of the compounds A.

### Compound Having Two or More (Meth)Acrylate Groups in One Molecule (Compound B)

In a case in which the liquid B includes the compound B, the compound B included in the liquid B is synonymous with the compound B included in the liquid A described above, and a preferred thereof except the content of the compound B is also similar.

The compound B included in the liquid B may be identical with or different from the compound B included in the liquid A. From the viewpoint of storage stability, the compound B included in the liquid B is preferably identical with the compound B included in the liquid A.

The content of the compound B is preferably from 0.5 parts by mass to 10 parts by mass, and mor preferably from 1 part by mass to 8 parts by mass with respect to 100 parts by mass of the compound A from the viewpoint of the flexibility and morphological stability of the obtained cured product. The above-described phrase "with respect to 100 parts by mass of compound A" refers to the total amount of the compound A included in the liquid A and the compound A included in the liquid B in a case in which the compounds A are included in both the liquid A and the liquid B. The above-described phrase "content of compound B" refers to the total amount of the compound B included in the liquid A and the compound B included in the liquid B in a case in which the compounds B are included in both the liquid A and the liquid B.

From the viewpoint of storage stability, the content of the compound B in the liquid B is preferably from 0.05% by mass to 3% by mass, more preferably from 0.1% by mass to 1% by mass, and still more preferably from 0.1% by mass to 0.5% by mass with respect to the total mass of the liquid B.

The liquid B may include one kind of the compound B singly, or may include two or more kinds of the compounds B.

### Polymerizable Polymer (Compound C)

In a case in which the liquid B includes the compound C, the compound C included in the liquid B is synonymous with the compound C included in the liquid A described above, and a preferred thereof except the content of the compound C is also similar.

In a case in which the compounds C are included in both the liquid A and the liquid B, the compound C included in the liquid B may be identical with or different from the compound C included in the liquid A. From the viewpoint of storage stability, the compound C included in the liquid B is preferably identical with the compound C included in the liquid A.

In a case in which the liquid B includes the compound C, the content of the compound C is preferably 10% by mass or less, more preferably 7% by mass or less, and still more preferably 5% by mass or less with respect to the total mass of the liquid B.

### <<Rheology Control Agent>>

The liquid B preferably further includes a rheology control agent from the viewpoint of miscibility and storage stability.

The rheology control agent is synonymous with the rheology control agent in the liquid A, and a preferred aspect thereof is also similar.

The liquid B need not include the compound A, compound B, and compound C described above from the viewpoint of storage stability. The liquid B may include at least one selected from the group consisting of the compound A, compound B, and compound C described above from the viewpoint of the miscibility of the liquid A and the liquid B. The phrase "liquid B does not include compound A, compound B, and compound C" means that the contents of the compound A, the compound B, and the compound C in the liquid B are 0% by mass, or none of the compound A, the compound B, and the compound C is included in an amount exhibiting polymerization reaction.

From the viewpoint of storage stability, it is preferable that the liquid B does not include any reducing agent. The phrase "liquid B does not include any reducing agent" means that the content of the reducing agent is 0% by mass, or the reducing agent is not included in an amount exhibiting reducing ability.

### <Other Subjects of Two-Component Curable Composition>

### <<Additional Additive>>

In the two-component curable composition according to the present disclosure, a component (hereinafter also referred to as "additional additive") other than the compound A, the compound B, the compound C, the polymerization initiator, the dispersant, the thermally-conductive filler, the plasticizer, the reducing agent (including the specific thiourea compound), and the rheology control agent may be included in the liquid A and/or the liquid B, if necessary.

An additive such as a corrosion inhibitor or an antirust agent can be blended as the additional additive, if appropriate.

Such additives as described above may be used singly, or in combination of two or more kinds thereof.

Examples of the corrosion inhibitor include benzotriazole, tolyltriazole, thiadiazole, and benzimidazole.

Examples of the antirust agent include a compound based on a metal sulfonate, and a sorbitan compound.

### <Mass Ratio between Liquid A and Liquid B>

The mass ratio between the liquid A and the liquid B is preferably from 4:1 to 1:4, more preferably from 2:1 to 1:2, and most preferably 1:1, based on mass, from the viewpoint of miscibility and usability.

### <<Shear Viscosities of Liquid A and Liquid B>>

From the viewpoint of miscibility and coating performance, each of the shear viscosities of the liquid A and the liquid B is independently preferably from 100 Pa·s to 400 Pa·s, more preferably from 100 Pa·s to 300 Pa·s, and still more preferably from 100 Pa·s to 200 Pa·s. The shear viscosities described above are values measured using a viscoelasticity measurement apparatus (for example, product name: MCR301, manufactured by Anton Paar GmbH) under conditions of a measurement temperature of 25°C and a shear rate of 10 s⁻¹.

### (Method of Producing Two-Component Curable Composition)

A method of producing the two-component curable composition according to the present disclosure is not particularly limited, and the two-component curable composition can be produced by, for example, the following method.

The compound A, the compound B, the dispersant, the reducing agent including the thiourea compound represented by Formula (a) (specific thiourea compound), and the thermally-conductive filler, and, if necessary, the compound C, the plasticizer, the rheology control agent, and the additional additive are put in an agitation container, and agitated and mixed to obtain the liquid A included in the two-component curable composition according to the present disclosure.

The polymerization initiator, the dispersant, the plasticizer, and the thermally-conductive filler, and, if necessary, the compound A, the compound B, the compound C, the rheology control agent, and the additional additive are put in an agitation container, and agitated and mixed to obtain the liquid B included in the two-component curable composition according to the present disclosure.

A known agitator or the like can be used for agitation and mixing.

In the case of adding the rheology control agent and the additional additive in the method of producing the two-component curable composition according to the present disclosure, the agitation may be performed only for a time for which the rheology control agent and the additive can be dissolved and dispersed.

The order of addition of the rheology control agent and the additional additive is not particularly limited, and can be set, if appropriate. For example, the compound A, the compound B, the dispersant, and the reducing agent including the specific thiourea compound, or the polymerization initiator, the dispersant, and the plasticizer, and the rheology control agent and the additional additive may be added together to the agitation container, or "compound A, compound B, dispersant, and reducing agent" or "polymerization initiator, dispersant, and plasticizer" may be mixed, followed by adding the rheology control agent and the additional additive.

### (Cured Product)

The cured product according to the present disclosure is a cured product of the two-component curable composition according to the present disclosure. A method of curing the two-component curable composition is not particularly limited, and the liquid A and the liquid B included in the two-component curable composition according to the present disclosure may be mixed.

A method of mixing the liquid A and the liquid B is not particularly limited, and a known agitator or the like can also be used.

The mixture ratio between the liquid A and the liquid B is preferably from 4:1 to 1:4, more preferably from 2:1 to 1:2, and most preferably 1:1, based on mass, from the viewpoint of miscibility and usability.

A temperature at which the liquid A and the liquid B are mixed (that is, curing temperature) is not particularly limited, and may be room temperature (25°C), or may be from 10°C to 40°C.

Irradiation with an active energy ray, heating, or the like may be performed after the mixture of the liquid A and the liquid B included in the two-component curable composition according to the present disclosure.

In the case of the heating, a heating temperature is preferably 60°C or more, and more preferably 70°C or more. Heating and warming time is preferably from 1 minute to 120 minutes.

The thermal conductivity of the cured product according to the present disclosure is preferably from 0.5 [W/(m·K)] to 50 [W/(m·K)], and preferably from 1 [W/(m·K)] to 20 [W/(m·K)] from the viewpoint of the properties of suppressing the changes of flexibility, morphological stability, and thermal conductivity.

For the softness of the cured product according to the present disclosure, the cured product preferably has an Asker C hardness of 70 or less, and more preferably 66 or less from the viewpoint of the stress relaxation of the cured product to a periphery component.

Likewise, the cured product preferably has a Shore OO hardness of 90 or less, and more preferably 86 or less.

In the present disclosure, the Asker C hardness is determined according to JIS K 7312:1996, and the Shore OO hardness is determined according to ASTM D2240.

### <Applications>

The two-component curable composition according to the present disclosure can be preferably used as, for example, TIM filled into a recess (gap between heat generator and radiator) formed in a substrate.

The two-component curable composition according to the present disclosure exhibits excellent curability, and further suppresses the rate of the rise of the viscosity after the mixture of the liquid A and the liquid B. Therefore, the two-component curable composition can be preferably applied as a gap filler.

### EXAMPLES

The two-component curable composition according to the present disclosure is specifically described below with reference to Examples. The two-component curable composition according to the present disclosure is not limited at all to these examples.

### (Examples 1 to 3 and Comparative Examples 1 to 4)

Each raw material was blended in an amount (part(s) by mass) described in Tables 1 and 2, and mixed using a planetary centrifugal mixer (product name: THINKY MIXER ARV-310, manufactured by THINKY CORPORATION) at 2000 rpm (revolutions per minute) for 2 minutes under atmospheric pressure, to prepare a two-component curable composition including a liquid A and a liquid B.

The following evaluations were performed using two-component curable compositions prepared in Examples 1 to 3 and Comparative Examples 1 to 4. The results are set forth in Tables 1 and 2.

### -Evaluations-

### <Shear Viscosity>

A shear viscosity was measured using a viscoelasticity measurement apparatus (product name: MCR301, manufactured by Anton Paar GmbH) under conditions of a measurement temperature of 25°C and a shear rate of 10 s⁻¹. A lower difference between the shear viscosities of a liquid A and a liquid B results in superior miscibility.

### <Pot Life>

The liquid A and the liquid B were mixed at each mixture ratio (mass ratio) set forth in Tables 1 and 2, followed by measuring time before the viscosity reached a double value.

### <Thermal Conductivity>

A thermal conductivity was measured according to ASTM D5470.

The liquid A and the liquid B were mixed at each mixture ratio (mass ratio) set forth in Tables 1 and 2, and the two-component curable composition formed to be 10 mm × 10 mm × 1 mm was then sandwiched between copper plates of 10 mm × 10 mm in an upward-downward direction, and left standing in an environment of 25°C for 24 hours (for 96 hours only in Comparative Example 4), to cure the two-component curable composition. Then, a thermal resistance (unit: K·cm²/W) was measured by a thermal resistance measurement apparatus (product name: thermal resistance measurement apparatus, manufactured by TSUKUBARIKASEIKI Co., Ltd.), and converted into a thermal conductivity (unit: W/(m·K)).

### <Morphological Stability>

### -Shore OO Hardness (Sample Thickness: 6 mm)-

The Shore OO hardness of the cured product of the two-component curable composition was measured according to ASTM D2240.

The liquid A and the liquid B were mixed at each mixture ratio set forth in Tables 1 and 2, and the curable composition was then formed to be 30 mm × 15 mm × 6 mm (thickness of 6 mm), and cured under the same curing conditions as those of the evaluation test of the thermal conductivity. The Shore OO hardness of the obtained cured product was measured using a hardness tester (durometer) (product name: GS-754G, manufactured by TECLOCK Co., Ltd.).

The lower value of the Shore hardness causes external force to be more easily relieved, and a shape to be more stably kept.

### -Asker C Hardness (Sample Thickness: 6 mm)-

The Asker C hardness of the cured product of the curable composition was measured according to JIS K 7312:1996.

The liquid A and the liquid B were mixed at each mixture ratio set forth in Tables 1 and 2, and the curable composition was then formed to be 30 mm × 15 mm × 6 mm (thickness of 6 mm), and cured under the same curing conditions as those of the evaluation test of the thermal conductivity. The Asker C hardness of the obtained cured product was measured using an Asker rubber hardness tester type C (manufactured by KOBUNSHI KEIKI CO., LTD.).

The lower value of the Asker C hardness causes external force to be more easily relieved, and a shape to be more stably kept.

**[Table 1]**

| | | Example 1 | | Example 2 | | Example 3 | | Comparative Example 1 | |
|---|---|---|---|---|---|---|---|---|---|
| | | Liquid A-1 | Liquid B-1 | Liquid A-2 | Liquid B-2 | Liquid A-3 | Liquid B-3 | Liquid A-3 | Liquid B-1 |
| Mixture ratio (mass ratio) | | 1 | 1 | 1 | 1 | 1 | 1 | 1 | 1 |
| Compound a | LIGHT ESTER L | 7.08 | - | 3.80 | - | - | - | 7.08 | - |
| Compound b | NK ESTER ITEC | - | - | - | - | 5.05 | 5.31 | - | - |
| Compound c | NK ESTER 9PG | 0.22 | - | 0.21 | - | 0.26 | - | 0.22 | - |
| Compound d | KANEKA XMAP RC110C | - | - | 3.20 | - | - | - | - | - |
| Dispersant | 9-Octadecenoic acid | 0.40 | 0.23 | 0.40 | 0.40 | 0.35 | 0.35 | 0.40 | 0.23 |
| Reducing agent | Hexoate cobalt (Co 12%) | - | - | - | - | - | - | - | - |
| | Trimethylthiourea | - | - | - | - | - | - | 0.50 | - |
| | N,N'-Dibutylthiourea (C4) | - | - | - | - | - | - | - | - |
| | N,N'-Diphenylthiourea | - | - | - | - | - | - | - | - |
| | N,N'-Dilaurylthiourea (C12) | 0.50 | - | 0.50 | - | 0.50 | - | - | - |
| Polymerization initiator | TRIGONOX K-80 | - | 0.45 | - | 0.45 | - | 0.45 | - | 0.45 |
| Plasticizer | ADK CIZER C-880 | - | 9.82 | 2.15 | 5.23 | 4.00 | 4.77 | - | 9.82 |
| | KAOLUBE 262 | - | - | - | 4.30 | - | - | - | - |
| Rheology control agent | CLAYTONE-40 | 1.00 | 1.00 | 0.50 | 1.10 | 0.60 | 0.60 | 1.00 | 1.00 |
| Thermally-conductive filler | Calcinated zinc oxide | 45.40 | 44.25 | 34.70 | 34.40 | 34.70 | 34.40 | 45.40 | 44.25 |
| | Zinc oxide No. 1 | 18.10 | 17.70 | 17.84 | 17.72 | 17.84 | 17.72 | 18.10 | 17.70 |
| | Magnesium oxide | 27.30 | 26.55 | 36.70 | 36.40 | 36.70 | 36.40 | 27.30 | 26.55 |
| Total | | 100.00 | 100.00 | 100.00 | 100.00 | 100.00 | 100.00 | 100.00 | 100.00 |
| Percentage (% by mass) of reducing agent with respect to compound A | | 7.06 | - | 13.16 | - | 9.90 | - | 7.06 | - |
| Evaluations | Shear viscosity (Pa·s) | 165 | 168 | 143 | 172 | 156 | 173 | 112 | 168 |
| | Pot life | 45 min | | 45 min | | 30 min | | 20 min | |
| | Thermal conductivity (W/m·K) | 3.4 | | 3.3 | | 3.2 | | 3.4 | |
| | Morphological stability (Shore OO) | 78 | | 75 | | 79 | | 80 | |
| | Morphological stability (Asker C) | 58 | | 52 | | 57 | | 60 | |

**[Table 2]**

| | | Comparative Example 2 | | Comparative Example 3 | | Comparative Example 4 | |
|---|---|---|---|---|---|---|---|
| | | Liquid A-4 | Liquid B-2 | Liquid A-5 | Liquid B-1 | Liquid A-6 | Liquid B-1 |
| Mixture ratio (mass ratio) | | 1 | 1 | 1 | 1 | 1 | 1 |
| Compound a | LIGHT ESTER L | 3.80 | - | 7.08 | - | 6.68 | - |
| Compound b | NK ESTER ITEC | - | - | - | - | - | - |
| Compound c | NK ESTER 9PG | 0.21 | - | 0.22 | - | 0.20 | - |
| Compound d | KANEKA XMAP RC110C | 3.20 | - | - | - | - | - |
| Dispersant | 9-Octadecenoic acid | 0.40 | 0.40 | 0.40 | 0.23 | 0.57 | 0.23 |
| Reducing agent | Hexoate cobalt (Co 12%) | - | - | - | - | 0.75 | - |
| | Trimethylthiourea | - | - | - | - | - | - |
| | N,N'-Dibutylthiourea (C4) | 0.50 | - | - | - | - | - |
| | N,N'-Diphenylthiourea | - | - | 0.50 | - | - | - |
| | N,N'-Dilaurylthiourea (C12) | - | - | - | - | - | - |
| Polymerization initiator | TRIGONOX K-80 | - | 0.45 | - | 0.45 | - | 0.45 |
| Plasticizer | ADK CIZER C-880 | 2.15 | 5.23 | - | 9.82 | - | 9.82 |
| | KAOLUBE 262 | - | 4.30 | - | - | - | - |
| Rheology control agent | CLAYTONE-40 | 0.50 | 1.10 | 1.00 | 1.00 | 1.00 | 1.00 |
| Thermally-conductive filler | Calcinated zinc oxide | 34.70 | 34.40 | 45.40 | 44.25 | 45.40 | 44.25 |
| | Zinc oxide No. 1 | 17.84 | 17.72 | 18.10 | 17.70 | 18.16 | 17.70 |
| | Magnesium oxide | 36.70 | 36.40 | 27.30 | 26.55 | 27.24 | 26.55 |
| Total | | 100.00 | 100.00 | 100.00 | 100.00 | 100.00 | 100.00 |
| Percentage (% by mass) of reducing agent with respect to compound A | | 13.16 | - | 7.06 | - | 11.23 | - |
| Evaluations | Shear viscosity (Pa·s) | 125 | 172 | (*) | 168 | 264 | 168 |
| | Pot life | 20 min | | Unmeasurable | | ≥ 5 hr | |
| | Thermal conductivity (W/m·K) | 3.3 | | - | | 3.4 | |
| | Morphological stability (Shore OO) | 77 | | - | | 82 | |
| | Morphological stability (Asker C) | 56 | | - | | 62 | |
| | | (*) Immiscible | | | | | |

The details of each component set forth in Tables 1 and 2 are as follows. In addition, "-" in Tables 1 and 2 represents that a corresponding component is not included, or a corresponding evaluation is not performed.

### <<Compound a>>

LIGHT ESTER L: lauryl methacrylate (compound represented by Formula (1)), manufactured by Kyoeisha Chemical Co., Ltd.

### <<Compound b>>

NK ESTER ITEC: 2-decyltetradecyl methacrylate (compound represented by Formula (1)), manufactured by SHIN-NAKAMURA CHEMICAL Co., Ltd.

### <<Compound c>>

NK ESTER 9PG: polypropyleneglycol dimethacrylate (9PG) (compound represented by Formula (2)), manufactured by SHIN-NAKAMURA CHEMICAL Co., Ltd.

### <<Compound d>>

KANEKA XMAP RC110C: bifunctional acryloyl terminal polyacrylate, manufactured by KANEKA CORPORATION

### <<Dispersant>>

9-Octadecenoic acid (oleic acid), manufactured by NOF CORPORATION

### <<Reducing Agent>>

Hexoate cobalt: Co: 12%, manufactured by TOEI CHEMICAL INDUSTRY CO., LTD.
Trimethylthiourea, manufactured by SANSHIN CHEMICAL INDUSTRY CO., LTD.
N,N'-Dibutylthiourea (C4), manufactured by SANSHIN CHEMICAL INDUSTRY CO., LTD.
N,N'-Diphenylthiourea, manufactured by Tokyo Chemical Industry Co., Ltd.
N,N'-Dilaurylthiourea (C12), manufactured by Kawaguchi Chemical Industry Co., LTD.

### <<Polymerization Initiator>>

TRIGONOX K-80: cumyl hydroperoxide, manufactured by Kayaku Nouryon Corporation <<Plasticizer>>
ADK CIZER C-880: mixed linear alkyl trimellitate ester, manufactured by ADEKA CORPORATION
KAOLUBE 262, manufactured by Kao Corporation

### <<Rheology Control Agent>>

CLAYTONE-40, manufactured by BYK

### <<Thermally-Conductive Filler>>

### (Zinc Oxide)

Calcinated zinc oxide: volume mean diameter D50: 10 µm, manufactured by HAKUSUI TECH CO., LTD.
Zinc oxide No. 1: volume mean diameter D50: 0.6 µm, manufactured by SAKAI CHEMICAL INDUSTRY CO., LTD.

### (Magnesium Oxide)

Magnesium oxide: SPHERICAL MAGNESIA DMG-60, volume mean diameter D50: 60 µm, manufactured by Denka Company Limited

As set forth in Tables 1 and 2, it is found that the two-component curable compositions in Examples 1 to 2 have superior curability, and the suppressed rate of the rise of viscosity after mixture of a liquid A and a liquid B, in comparison with the two-component curable compositions in Comparative Examples 1 to 4. It is found that the two-component curable composition in Example 3, in which a compound having one (meth)acrylate group in one molecule is also included in a liquid B, has superior curability, and the suppressed rate of the rise of viscosity after mixture of a liquid A and the liquid B, in comparison with the two-component curable compositions in Comparative Examples 1 to 4. In Comparative Example 3 in which N,N'-diphenylthiourea was used as a reducing agent, a liquid A and a liquid B were not mixed, any cured product was not able to be formed, and therefore, neither thermal conductivity nor morphological stability was able to be evaluated. Comparative Example 4 in which hexoate cobalt is used as a reducing agent results in too long pot life. It is shown that long time is needed before curing after the mixture of a liquid A and a liquid B in Comparative Example 4. In other words, Comparative Example 4 results in poor curability.

The entire content of the disclosure by Japanese Patent Application No. 2023-044693 is incorporated herein by reference.

All documents, patent applications, and technical standards described in this specification are herein incorporated by reference to the same extent as if each individual document, patent application, or technical standard was specifically and individually indicated to be incorporated by reference.

## Claims

1. A two-component curable composition comprising:
a liquid A containing a compound having one (meth)acrylate group in one molecule, a compound having two or more (meth)acrylate groups in one molecule, a dispersant, a thiourea compound represented by the following Formula (a), and a thermally-conductive filler; and
a liquid B containing a polymerization initiator, a dispersant, a plasticizer, and a thermally-conductive filler, 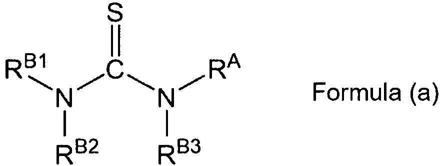
wherein in Formula (a), R^{A} represents a straight- or branched-chain aliphatic hydrocarbon group having from 8 to 18 carbon atoms, and each of R^{B1}, R^{B2}, and R^{B3} independently represents a straight- or branched-chain aliphatic hydrocarbon group having from 8 to 18 carbon atoms, or a hydrogen atom.

2. The two-component curable composition according to claim 1, wherein R^{B1} in the thiourea compound represented by Formula (a) is a straight- or branched-chain aliphatic hydrocarbon group having from 8 to 18 carbon atoms.

3. The two-component curable composition according to claim 1, wherein a content of the thiourea compound represented by Formula (a) is from 2.00 parts by mass to 20.00 parts by mass with respect to 100 parts by mass of the compound having one (meth)acrylate group in one molecule.

4. The two-component curable composition according to claim 1, wherein the liquid B comprises a compound having one (meth)acrylate group in one molecule.

5. A cured product of the two-component curable composition according to any one of claims 1 to 4.
